(19) Europäisches Patentamt / European Patent Office / Office européen des brevets

(11) **EP 2 021 412 B1**

(12) **EUROPEAN PATENT SPECIFICATION**


(45) Date of publication and mention of the grant of the patent:
**05.08.2009 Bulletin 2009/32**

(21) Application number: **07747349.4**

(22) Date of filing: **14.03.2007**

(51) Int Cl.:
***C08L 71/00*** *(2006.01)*

(86) International application number:
**PCT/NL2007/050103**

(87) International publication number:
**WO 2007/105952 (20.09.2007 Gazette 2007/38)**


(54) **GAS SEPARATION MEMBRANES COMPRISING PERMEABILITY ENHANCING ADDITIVES**

GASTRENNMEMBRANEN MIT PERMEABILITÄTSVERBESSERNDEN ADDITIVEN

MEMBRANES DE SÉPARATION DE GAZ COMPRENANT DES ADDITIFS AMÉLIORANT LA PERMÉABILITÉ


(84) Designated Contracting States:
**AT BE BG CH CY CZ DE DK EE ES FI FR GB GR HU IE IS IT LI LT LU LV MC MT NL PL PT RO SE SI SK TR**

(30) Priority: **15.03.2006 EP 06111192**

(43) Date of publication of application:
**11.02.2009 Bulletin 2009/07**



(73) Proprietor: **Stichting Voor De Technische Wetenschappen**
**3527 JP Utrecht (NL)**

(72) Inventors:
- **WESSLING, Matthias**
  **7531 EK Enschede (NL)**
- **STERESCU, Dana Manuela**
  **5045 WN Tilburg (NL)**
- **STAMATIALIS, Dimitrios**
  **7534 JJ Enschede (NL)**

(74) Representative: **Swinkels, Bart Willem et al**
**Nederlandsch Octrooibureau**
**P.O. Box 29720**
**2502 LS Den Haag (NL)**



(56) References cited:
**US-A- 4 468 503**
**US-A- 4 488 886**
**US-A- 4 684 376**


EP 2 021 412 B1


Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Field of the invention

The present invention relates to polymer compositions comprising a (co)polymer comprising (a) an arylene oxide moiety and (b) a dendritic (co)polymer, a hyperbranched (co)polymer or a mixture thereof, and the use of these polymer compositions as membrane materials for the separation of gases. The present invention further relates to the use of a dendritic (co)polymer, a hyperbranched (co)polymer or a mixture thereof as permeability and/or selectivity enhancing additives in gas separation membranes.

### Background of the invention

Permeable membranes that are capable of separating a gaseous component from a fluid mixture, either gaseous or liquid, are considered in the art as a convenient, potentially highly advantageous means for achieving desirable fluid separation and/or concentration. To achieve a selective separation, the membrane must exhibit less resistance to the transport of one or more components than that of at least one other component of the mixture. in order for selective separation of one or more desired components by the use of separation membranes to be commercially attractive, the membranes must not only be capable of withstanding the conditions to which they may be subjected during the separation operation, but they also must also provide an adequately selective separation of the one or more desired components and a sufficiently high flux, i.e. the permeation rate of the permeate per unit surface area, so that the use of the separation procedure is carried out on an economically attractive basis.

Membranes have been manufactured in various shapes, e.g. flat sheets which may be supported in a typical plate and frame structure, flat sheets that are rolled into spirals together with appropriate spacing materials to provide spiralling channels permitting the passage of feed on one side of the coiled membrane to the opposite side of the membrane, hollow fibres and the like.

Various types of permeable membranes have been proposed in the art for carrying out a variety of fluid separation operations. Isotropic and asymmetric type membranes for instance are comprised essentially of a single permeable membrane material capable of selectively separating desired components of a fluid mixture. Isotropic membranes have the same density throughout the thickness thereof. Such membranes generally have the disadvantage of low permeability due to the relatively high membrane thickness. Asymmetric membranes have two distinct morphological regions within the membrane structure. One region comprises a thin, dense semipermeable skin capable of selectively permeating one component of a fluid mixture. The other region comprises a less dense, porous, non-selective support region that serves to preclude the collapse of the thin skin region of the membrane during operation. Composite membranes generally comprise a thin layer or coating of a suitable permeable membrane material superimposed on a porous substrate. The separation layer is advantageously very thin so as to provide a high permeability. The substrate only serves to provide a support for the thin membrane layer positioned thereon and has substantially no separation characteristics. Reference is made to R.W. Baker, Ind. Eng. Chem. Res. 41, 1393 - 1411, 2002).

An important feature of polymeric membrane separation of gases is that high permeability (or high flux) is usually accompanied by a low selectivity and vice versa which is also known as the upper bound relationship or "trade off" relationship of binary gas mixtures (L.M. Robeson, J. Memb. Sci. 62, 165, 1991). Consequently, it would be highly desirable to improve the permeability of a membrane without a deterioration of the selectivity.

Poly(phenylene oxide) has already for a long period of time been considered important as a gas separation material, in particular due to its good gas permeation properties, physical properties, and commercial availability. For example, U.S. 3.350.844 discloses the use of dense poly(phenylene oxide) membranes for gas separations. However, dense membranes suffer from low gas permeation rates as the gas permeation rate is inversely proportional to the thickness of the dense gas separating layer as is well known in the art.

This disadvantage was partially overcome in the prior art through the manufacture of asymmetric poly(phenylene oxide) gas separation membranes as is disclosed in for example U.S. 3.709.774, U.S. 3.762.136, U.S. 3.852.388 and US 3.980.456. Decreasing the layer thickness of the separating skin-layer is non-trivial, but required in order to maximize productivity (trans-membrane flux). US 5.129.920 discloses a particular means to reduce skin thickness with remaining integrity of the separation performance.

US 4.230.463 discloses multicomponent gas membranes comprising a porous separation membrane comprising e.g. a poly(phenylene oxide) and a coating which is in contact with the porous separation membrane, wherein the separating properties are in principle determined by the porous membrane. However, such membranes suffer from the disadvantage that they may have a poor environmental resistance, e.g. against acidic gases.

The use of poly(phenylene oxide) and similar polymers as gas separation membranes is well known in the art. Reference is for example made to US 3.350.844, US 3.709.774, US 3.762.136, US 3.852.388 and US 3.735.559.

Environmentally resistant separation membranes based on cross-linked poly(phenylene oxide) are disclosed

in e.g. US 4.652.283 and US 5.151.182.

Other methods to improve the performance of polymeric gas separation membranes are to include or to incorporate additives. For example, Ruiz-Trevino and Paul (J. Appl. Polym. Sci. 68, 403 - 415, 1998) disclose the incorporation of an alkylated naphthalene oligomer (known commercially as Kenflex A from Kenrich Petrochemical, Inc., Bayonne, NJ, USA) in polymeric membranes to improve the selectivity-permeability balance of the membrane. The effect of the low-molecular weight additive follows the traditionally observed trade-off between selectivity and permeability

US 2004/0177753 (cf. also Y. Xiao, T-S. Chung, M.L. Chng, Langmuir 20, 8230 - 8238, 2004) discloses a process wherein a polyimide is treated with for example a dendrimer, wherein the dendrimer cross-links the polyimide. The dendrimer may be a polypropyleneimine dendrimer up to generation four and having primary amino groups. It appears that increased cross-linking provides higher selectivity, but that permeability decreases.

WO 99/40996 discloses an asymmetric composite membrane having at least three layers, wherein each consecutive layer has a larger pore size than the preceding layer and wherein the layer having the smallest pores is impregnated with an ordered macromolecular structure, e.g. a dendrimer. Example 13 discloses a membrane of polyimide impregnated with a polysiloxane having terminal hydroxy groups which according ton Example 15 can be used to separate oxygen from air.

Increasing the productivity of a membrane is an important industrial challenge. WO 02/43937 discloses a method of shaping a hollow fibre to increase the effective surface area of a fibre with the aim to increase the productivity. The proof of such a method as increasing the productivity is reported by Nijdam et al. in J. Memb. Sci., 256, 209-215, 2005. The authors report a productivity improvement of 20%. It is obvious to the person skilled in the art that a much more dramatic increase in productivity is desired.

Consequently, there is still a need in the art to provide polymeric membranes having an improved permeability without a deteriorated selectivity or vice versa. It has now surprisingly be found that polymeric compositions of arylene oxide polymers and dendrimeric (co)polymers, hyperbranched (co)polymers and mixtures thereof, in particular compositions comprising a relatively low amount of the dendrimeric (co)polymer, the hyperbranched (co)polymer or a mixture thereof, have a very high permeability in comparison with neat arylene oxide polymer at a similar selectivity.

**Summary of the invention**

The present invention therefore relates to a polymer composition comprising (a) a (co)polymer comprising an arylene oxide moiety and (b) a dendritic (co)polymer, a hyperbranched (co)polymer or a mixture thereof. The present invention also relates to a process for the preparation of the polymer composition and the use thereof in a membrane, in particular a gas separation membrane. The present invention further relates to the use of a dendritic (co)polymer, a hyperbranched (co)polymer or a mixture thereof as permeability and/or selectivity enhancing additives in gas separation membranes.

Detailed description of the invention

**Component (a)**

According to the present invention, the (co)polymer comprising an arylene oxide moiety is preferably a polyarylene oxide, more preferably a polyphenylene oxide. Preferably, the (co)polymer comprising the arylene oxide moiety has the formula (I):

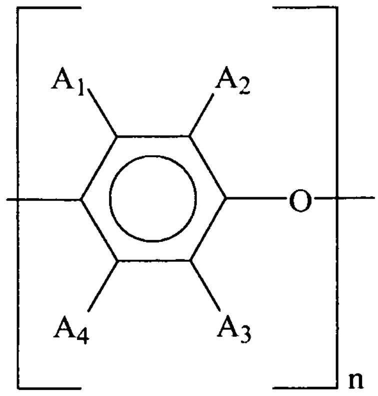

(I)

wherein $A_1$, $A_2$, $A_3$ and $A_4$ are independently selected from the group consisiting of hydrogen, linear or branched $C_1$ - $C_{12}$ alkyl which may optionally be halogenated, $C_6$ - $C_{12}$ arylalkyl, $C_6$ - $C_{12}$ alkylaryl, and halogen. Preferably, $A_2$ and $A_3$ are independently selected from the groups of linear or branched $C_1$ - $C_4$ alkyl and $A_1$ and $A_4$ are independently selected from hydrogen, halogen and linear or branched $C_1$ - $C_4$ alkyl.

Suitable alkyl groups are for example methyl, ethyl, 1-propyl, 2-propyl, 1-butyl and 2-butyl. Suitable arylalkyl groups are for example benzyl and 4-methylbenzyl. Suitable alkylaryl groups are for example 4-methylphenyl and 2,4-dimethylphenyl.

Most preferably, the (co)polymer comprising the arylene oxide moiety is poly(2,6-dimethyl-1,4-phenylene oxide).

Optionally, the (co)polymer comprising the arylene oxide moiety is cross-linked as is disclosed in e.g. US 4.652.283 and US 5.151.182, incorporated by reference for the US patent practice.

## Component (b)

Component (b) can be a dendritic (co)polymer, a (true) hyperbranched (co)polymer or a mixture thereof. It is well known in the art that dendritic (co)polymers are not always perfectly branched and may therefore have a hyperbranched structure. The degree of branching (*DB*) can be defined by:

$$DB = \frac{(D+T)}{(D+L+T)}$$

wherein *D* is the number of dendritic, *L* the number of linear and *T* the number of terminal units. Perferct dendrimers will have a *DB* of 1, whereas hyperbranched (co)polymers have typically a *DB* of 0.4 to 0.5 up to even 0.9. In this patent application, the term "dendrimer" is to be understood as including "perfectly branched dendrimers" as well as "imperfectly branched dendrimers" which are also referred to as "hyperbranched (co)polymers". Alternatively, the term "hyperbranched (co)polymers" may also comprise "true" hyperbranched (co)polymers. That is, that these macromolecules are purposively prepared as having a hyperbranched structure. The term "dendrimer" is to be understood as comprising both dendrimeric homopolymers and dendrimeric copolymers. The term "copolymer" includes polymers made of at least two different monomers.

Preferably, if component (b) is a dendritic (co)polymer, the latter is preferably from the polyester type having terminal hydroxy groups and is derived from a central initiator molecule comprising three to six hydroxy groups and a monomeric chain extender.

More preferably, the dendritic (co)polymer is derived from a central initiator molecule having at least one reactive hydroxy group (A), which hydroxy group (A) under formation of an initial tree structure is bonded to a reactive carboxyl group (B) of a monomeric chain extender holding the two reactive groups (A) and (B), which tree structure is optionally extended and further branched from the initiator molecule by an addition of further molecules of a monomeric chain extender by means of bonding with the reactive groups (A) and (B) thereof, wherein the monomeric chain extender has at least one carboxyl group (B) and at least two hydroxy groups (A) or hydroxyalkyl substituted hydroxyl groups (A).

Examples for suitable central initiator molecules are dimethylol propane, ditrimethylene propane, pentaerythritol, glycerol and the like. More preferably, the central initiator molecule comprises four hydroxy groups.
The monomeric chain extender is preferably a monofunctional $C_2$ - $C_6$ carboxylic acid having at least two hydroxy groups. Most preferably, the chain extender is 2,2-bis(hydroxymethyl)propionic acid.
Preferably, the first generation of the dentritic (co)polymer has the formula (II):

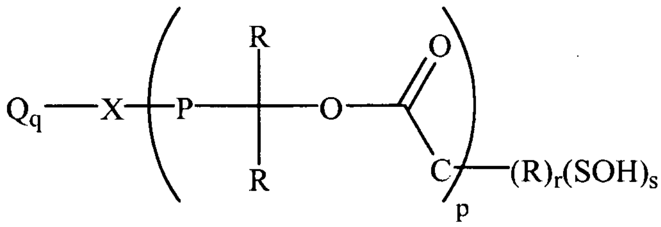

(II)

wherein X is O or C;

Q is H or linear or branched $C_1$ - $C_6$ alkyl;
P is linear or branched $C_1$ - $C_6$ alkylene;
R is H or linear or branched $C_1$ - $C_6$ alkyl;
p + q = 2 or 4;
if X is O, then q = 0 and p = 2;
if X is C, then p = 2 - 4, q = 0 - 2, and p + q =4;
S is linear or branched $C_1$ - $C_6$ alkylene;
r+s=3;
r = 0 or 1; and
s = 2 or 3.

Suitable alkyl groups are identified above. Suitable alkylene groups include methylene, ethylene, 1,3-propylene, 1,2-propylene, 2-methyl-1,3-propylene and the like.
In a preferred class of the dendritic (co)polymers according to formula (III), q = 0, X = C, and p = 4.
In a more preferred class of the dendritic (co)polymers according to formula (III), q = 0, X = C, p = 4, r = 1, and s = 2.
The dendritic (co)polymer according to the present invention is obtainable by converting a central initiator molecule according to formula (III) with a monomeric chain extender according to formula (IV):

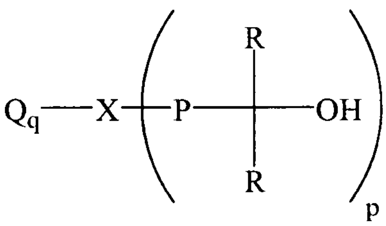

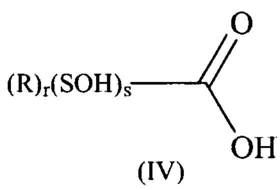

(IV)

(III)

wherein P, Q, R, S, p, q, r and s are as defined above. Preferably, the conversion is performed in the presence of an acidic catalyst, e.g. a Bronsted acid or a Lewis acid.
Suitable examples of the compounds according to formula (III) are trimethylolethane, trimethylolpropane, glycerol, pentaerythritol, ditrimethylolpropane, diglycerol and ditrimethylolethane. A preferred example of the compound according to formula (III) is pentaerythritol.

Suitable examples of the compounds according to formula (IV) are $\alpha,\alpha$-bis(hydroxymethyl)propionic acid, $\alpha,\alpha$-bis(hydroxymethyl)butyric acid, $\alpha,\alpha$-bis(hydroxymethyl)valeric acid, and $\alpha,\alpha,\alpha$ -tris(hydroxymethyl)acetic acid.

A preferred example of the compound according to formula (IV) is $\alpha,\alpha$-bis(hydroxymethyl)propionic acid

Preferably, the dendritic (co)polymer according to the present invention comprises the 1st - 6th generation, more preferably the 1st - 4th generation.

Alternatively, if component (b) is a "true" hyperbranched (co)polymer, the latter is preferably from the polyester type having terminal hydroxy groups and is derived from a central core, at least one generation comprising a branching chain extender and optionally at least one generation comprising a spacing chain extender.

The central core is preferably selected from the group consisting of epoxide compounds having at least one reactive epoxide group and reaction products of epoxide compounds, said reaction products having at least one reactive epoxide group. The branching chain extender is preferably selected from the group consisting of branching chain extenders having at least three reactive sites, said reactive sites comprising (i) at least one hydroxy group or a hydroxyalkyl substituted hydroxy group and at least a carboxy group, or (ii) at least one hydroxy group or a hydroxyalkyl substituted hydroxy group and at least a terminal epoxide group. The spacing chain extender is preferably selected from the group consisting of spacing chain extenders having at least two reactive groups, wherein one reactive group is a hydroxy group or a hydroxyalkyl substituted hydroxy group and one reactive group is a carboxy group or an epoxide group.

More preferably, the "true" hyperbranched (co)polymer comprises a central nucleus reacted with at least one generation of a monomeric or polymeric branching chain extender and optionally at least one generation of a monomeric or polymeric spacing chain extender, wherein:

(a) the central nucleus prior to the reaction comprises a reactive epoxide group and is selected from the group consisting of:

- (i) a glycidyl ester of:
  - (1) a saturated monofunctional carboxylic acid having 1 - 24 carbon atoms;
  - (2) an unsaturated monofunctional carboxylic acid having 3 - 24 carbon atoms; or;
  - (3) a saturated or unsaturated di-, tri- or polyfunctional carboxylic acid having 3 - 24 carbon atoms;
- (ii) a glycidyl ether of:
  - (1) a saturated monofunctional alcohol having 1 - 24 carbon atoms;
  - (2) an unsaturated monofunctional alcohol having 2 - 24 carbon atoms;
  - (3) a saturated or unsaturated di-, tri- or polyfunctional alcohol having 3 - 24 carbon atoms;
  - (4) a phenol or a reaction product thereof;
  - (5) a condensation product between a phenol and at an aldehyde or an oligomer of such a product;
- (iii) a mono-, di- or triglycidyl substituted isocyanurate; and
- (iv) an aliphatic, cycloaliphatic or aromatic epoxy polymer;

(b) wherein the branching chain extender comprises three or more reactive sites, one of which being a hydroxy group or a hydroxyalkyl substituted hydroxy group and a carboxy group or terminal epoxide; and

(c) wherein the optional spacing chain extender comprises two or more reactive sites, one of which being a hydroxy group or hydroxyalkyl substituted hydroxy group.

Preferably, the hyperbranched (co)polymer according to the present invention comprises the 1st - 6th generation, more preferably the 1st - 4th generation.

According to the inventon it is preferred that component (b) is the dendritic (co)polymer disclosed above.

Additionally, it is preferred that the dendritic (co)polymer or the hyperbranched (co)polymer has 12 to 128 hydroxy groups as functional groups. It is furthermore preferred that the $M_w$ of the dendritic (co)polymer or the hyperbranched (co)polymer is in the range of 1000 - 10000, more preferably in the range of 1500 to 7500. Additionally, the dendritic (co)polymer or the hyperbranched (co)polymer has preferably a glass transition temperature $T_g$ of 80°C or lower, more preferably of 60°C or lower.

Component (b) is preferably selected from the group consisting of Boltorn polymers that are manufactured by Perstorp AB, Sweden. Boltorn type polymers are disclosed in for example US 5.418.301, incorporated by reference herein for the US patent practice. Suitable hyperbranched (co)polymers are for example disclosed in US 5.663.247, incorporated by reference herein for the US patent practice.

**Polymer composition**

According to the invention, the polymer composition comprises preferably 0.01 to 10.0 wt.% of the dendritic (co)polymer, the hyperbranched (co)polymer or the mixture thereof, calculated on the total weight of the polymer composition. More preferably, the polymer composition comprises 0.02 to 5.0 wt.% of the dendritic (co)polymer, the hyperbranched (co)polymer or the mixture thereof.

The present invention further relates to a process for preparing a polymer composition, wherein (i) a dendritic (co)polymer, a hyperbranched (co)polymer or a mixture thereof is dispersed in (ii) a (co)polymer comprising an arylene oxide moiety. Preferably, 0.01 to 10.0 wt.% of (i) is dispersed in (ii).

The polymer composition according to the present invention is especially suitable for manufacturing membranes, in particular membranes for separating gases.

The membranes according to the invention may comprise a support. Suitable supports include anisotropic porous support to provide a low resistance to permeate passage.

**Examples**

Example 1 - Preparation of PPO - Boltorn membranes

PPO samples were prepared according to the method described in J. Smid et al., J. Membr. Sci. 64, 121, 1991. For the preparation of pure PPO membranes, the PPO was dissolved in chloroform (10 wt % polymer solution). The solution was cast on a glass plate and dried first under nitrogen atmosphere at room temperature (20° - 25°C) for 3 days and then in a vacuum oven at 50°C under nitrogen atmosphere for 2 days.

For the preparation of PPO membranes dispersed with Boltorn (three different generations: H20, H30 and H40), the PPO and the Boltorn were dissolved separately: PPO in chloroform (10 wt % polymer solution) and the Boltorn in NMP (10 wt % Boltorn solution), respectively. The solutions were stirred at room temperature until complete dissolution of PPO and Boltorn in chloroform and NMP, respectively (for 3 - 4 hours). Then, the two solutions were mixed in order to get a polymer solution containing 0.05, 0.1, 0.25, 0.5, 0.75 and 1.0 wt. % Boltorn. The solutions were stirred until they became homogeneous (for 4 hours).

These PPO-dispersed Boltorn solutions were cast on a glass plate and dried under a nitrogen atmosphere at room temperature (20°-25°C) for 3 days. After that the PPO-Boltorn films of 40 - 70 μm thickness were peeled off from the glass plate and dried in a vacuum oven at 30°C until constant weight (for approximately 2 months). Table 1 presents the composition of the solutions for the membrane preparation and the estimated amounts of Boltorn in the membrane, calculated using the equation:

$$\%\,\mathrm{wt}\ (\mathrm{Boltorn}\ /\ \mathrm{membrane}) = = \frac{g_{\mathrm{Boltorn}}}{g_{\mathrm{Boltorn}} + g_{\mathrm{PPO}}} \mathrm{x}100$$

Table 1

| % wt. Boltorn in PPO-Boltorn solution | % wt. Boltorn / membrane |
|---|---|
| 0.05 | 0.5 |
| 0.1 | 1.0 |
| 0.25 | 2.4 |
| 0.5 | 4.8 |
| 0.75 | 7.0 |
| 1.0 | 9.1 |

For comparison, membranes were also prepared by dissolution of PPO in a mixture of chloroform/NMP, following exactly the procedure as for the preparation of PPO-Boltorn membranes, without the addition of Boltorn.

Example 2

The gas permeation properties of the resulting membranes are measured and a particular maximum was observed of the enhancement at concentration for all gases at very low concentrations. Figure 1 shows the results for Boltorn H30 at a feed pressure of 1.5 bar (permeate pressure is vacuum; ♦ = $N_2$; ■ = $O_2$; ▲ = $CO_2$; ● = He). The graphs for the other generations of the Boltorn dendrimers (H20 and H40) are similar. The selectivity data are shown in Table 2.

Table 2

| wt.% H30 | $O_2/N_2$ | $CO_2/N_2$ | $CO_2/O_2$ |
|---|---|---|---|
| 0.0 | 4.33 | 18.69 | 4.32 |
| 1.0 | 3.50 | 15.88 | 4.54 |
| 2.4 | 4.13 | 22.76 | 5.51 |
| 4.8 | 3.93 | 18.78 | 4.90 |
| 7.0 | 3.93 | 17.64 | 4.48 |
| 9.1 | 4.21 | 19.92 | 4.73 |

**Claims**

**1.** A membrane comprising a polymer composition comprising (a) a (co)polymer comprising an arylene oxide moiety and (b) a dendritic (co)polymer, a hyperbranched (co)polymer or a mixture thereof.

**2.** The membrane according to Claim 1, wherein the polymer composition comprises 0.01 to 10.0 wt.% of the dendritic (co)polymer, the hyperbranched (co)polymer or the mixture thereof, calculated on the total weight of the polymer composition.

**3.** The membrane according to Claim 1 or Claim 2, wherein the (co)polymer comprising the arylene oxide moiety has the formula (I):

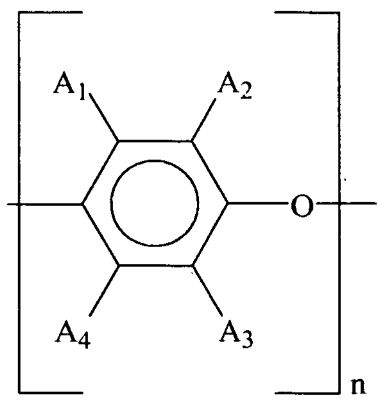

(I)

wherein $A_1$, $A_2$, $A_3$ and $A_4$ are independently selected from the group consisiting of hydrogen, linear or branched $C_1$ - $C_{12}$ alkyl which may optionally be halogenated, $C_6$ - $C_{12}$ arylalkyl, $C_6$ - $C_{12}$ alkylaryl, and halogen. Preferably, $A_2$ and $A_3$ are independently selected from the groups of linear or branched $C_1$ - $C_4$ alkyl and $A_1$ and $A_4$ are independently selected from hydrogen, halogen and linear or branched $C_1$ - $C_4$ alkyl.

**4.** The membrane according to any one of Claims 1 - 3, wherein the dendritic (co)polymer is derived from a central initiator molecule having at least one reactive hydroxy group (A), which hydroxy group (A) under formation of an initial tree structure is bonded to a reactive carboxyl group (B) of a monomeric chain extender holding the two reactive

groups (A) and (B), which tree structure is optionally extended and further branched from the initiator molecule by an addition of further molecules of a monomeric chain extender by means of bonding with the reactive groups (A) and (B) thereof, wherein the monomeric chain extender has at least one carboxyl group (B) and at least two hydroxy groups (A) or hydroxyalkyl substituted hydroxyl groups (A).

**5.** The membrane according to Claim 4, wherein the dendritic (co)polymer has the formula (II):

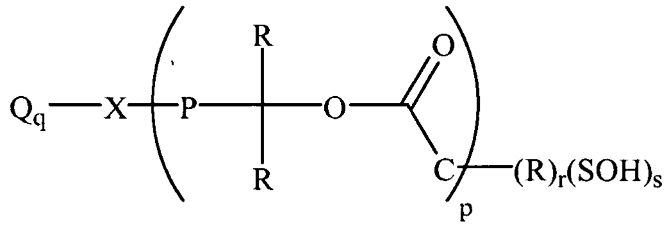

(II)

wherein X is O or C;

Q is H or linear or branched $C_1$ - $C_6$ alkyl;
P is linear or branched $C_1$ - $C_6$ alkylene;
R is H or linear or branched $C_1$ - $C_6$ alkyl;
p + q = 2 or 4;
if X is O, then q = 0 and p = 2;
if X is C, then p = 2 - 4, q = 0 - 2, and p + q =4;
S is linear or bamched $C_1$ - $C_6$ alkylene;
r+s=3;
r = 0 or 1; and
s = 2 or 3.

**6.** The membrane according to any one of Claims 1 - 5, wherein the hyperbranched (co)polymer comprises a central nucleus reacted with at least one generation of a monomeric or polymeric branching chain extender and optionally at least one generation of a monomeric or polymeric spacing chain extender, wherein:

(a) the central nucleus prior to the reaction comprises a reactive epoxide group and is selected from the group consisting of:

(i) a glycidyl ester of:

(1) a saturated monofunctional carboxylic acid having 1 - 24 carbon atoms;
(2) an unsaturated monofunctional carboxylic acid having 3 - 24 carbon atoms; or;
(3) a saturated or unsaturated di-, tri- or polyfunctional carboxylic acid having 3 - 24 carbon atoms;

(ii) a glycidyl ether of:

(1) a saturated monofunctional alcohol having 1 - 24 carbon atoms;
(2) an unsaturated monofunctional alcohol having 2 - 24 carbon atoms;
(3) a saturated or unsaturated di-, tri- or polyfunctional alcohol having 3 - 24 carbon atoms;
(4) a phenol or a reaction product thereof;
(5) a condensation product between a phenol and at an aldehyde or an oligomer of such a product;

(iii) a mono-, di- or triglycidyl substituted isocyanurate; and
(iv) an aliphatic, cycloaliphatic or aromatic epoxy polymer;

(b) wherein the branching chain extender comprises three or more reactive sites, one of which being a hydroxy group or a hydroxyalkyl substituted hydroxy group and a carboxy group or terminal epoxide; and

(c) wherein the optional spacing chain extender comprises two or more reactive sites, one of which being a hydroxy group or hydroxyalkyl substituted hydroxy group.

**7.** The membrane according to any one of Claims 1 - 6, wherein the dendritic (co)polymer and the hyperbranched (co) polymer comprise the $1^{st}$ - $6^{th}$ generation.

**8.** The membrane according to any one of Claims 1 - 7, wherein the dendritic (co)polymer and the hyperbranched (co) polymer have 12 to 128 hydroxy groups as functional groups.

**9.** The membrane according to any one of Claims 1 - 8, wherein the dendritic (co)polymer and the hyperbranched (co) polymer have a $M_w$ of 1000 - 10000.

**10.** The membrane according to any one of Claims 1 - 9, wherein the dendritic (co)polymer and the hyperbranched (co) polymer have a $T_g$ of lower than 80°C.

**11.** The membrane according to any one of Claims 1 - 10, wherein (b) is a dendritic (co)polymer.

**12.** The Membrane according to any one of Claims 1 - 11, further comprising a support.

**13.** The membrane according to Claim 12, wherein the support is an anisotropic porous support.

**14.** A process for preparing a membrane according to any one of claims 1 - 7, wherein a polymer composition comprising (i) a dendritic (co)polymer, a hyperbranched (co)polymer or a mixture thereof and (ii) a (co)polymer comprising an arylene oxide moiety, is manufactured into a membrane.

**15.** The process according to Claim 14, wherein the polymer composition comprises 0.01 to 10.0 wt.% of the dendritic (co)polymer, the hyperbranched (co)polymer or the mixture thereof, calculated on the total weight of the polymer composition.

**16.** Use of the membrane according to any one of Claims 10 - 13 for the separation of a gas.

**17.** Use according to Claim 16, wherein the membrane comprises a polymer composition comprising (a) a (co)polymer comprising an arylene oxide moiety and (b) a dendritic (co)polymer, a hyperbranched (co)polymer or a mixture thereof, said polymer composition enhancing the permeability and/or selectivity of the membrane.

**Patentansprüche**

**1.** Membran, die eine Polymerzusammensetzung umfasst, die (a) ein (Co)polymer, das eine Arylenoxid-Einheit umfasst, und (b) ein dendritisches (Co)polymer, ein hyperverzweigtes (Co)polymer oder eine Mischung davon umfasst.

**2.** Membran nach Anspruch 1, wobei die Polymerzusammensetzung 0,01 bis 10,0 Gew.-% des dendritischen (Co) polymers, des hyperverzweigten (Co)polymers oder der Mischung davon umfasst, berechnet auf der Basis des Gesamtgewichtes der Polymerzusammensetzung.

**3.** Membran nach Anspruch 1 oder Anspruch 2, wobei das (Co)polymer, das die Arylenoxid-Einheit umfasst, die Formel (I) besitzt:

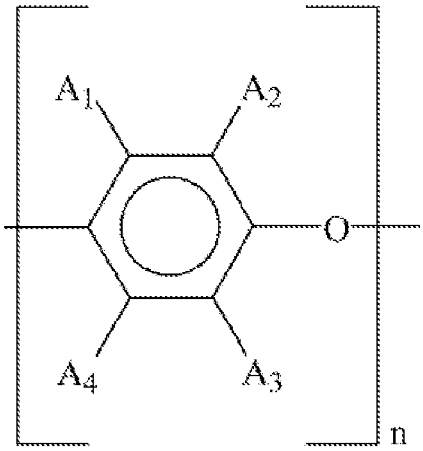

(I)

worin $A_1$, $A_2$, $A_3$ und $A_4$ unabhängig ausgewählt sind aus der Gruppe, bestehend aus Wasserstoff, linearem oder verzweigtem $C_1$-$C_{12}$-Alkyl, das gegebenenfalls halogeniert sein kann, $C_6$-$C_{12}$-Arylalkyl, $C_6$-$C_{12}$-Alkylaryl und Halogen. Vorzugsweise sind $A_2$ und $A_3$ unabhängig ausgewählt aus den Gruppen von linearem oder verzweigtem $C_1$-$C_4$-Alkyl und sind $A_1$ und $A_4$ unabhängig ausgewählt aus Wasserstoff, Halogen und linearem oder verzweigtem $C_1$-$C_4$-Alkyl.

**4.** Membran nach einem der Ansprüche 1 bis 3, wobei das dendritische (Co)polymer abgeleitet ist von einem zentralen Initiatormolekül mit wenigstens einer reaktiven Hydroxygruppe (A), wobei diese Hydroxygruppe (A) unter Bildung einer anfänglichen Baumstruktur an eine reaktive Carboxylgruppe (B) eines monomeren Kettenverlängerers gebunden wird, der die zwei reaktiven Gruppen (A) und (B) enthält, wobei diese Baumstruktur gegebenenfalls vom Initiatormolekül aus durch ein Hinzufügen weiterer Moleküle eines monomeren Kettenverlängerers mittels Bindung mit den reaktiven Gruppen (A) und (B) davon verlängert und weiter verzweigt wird, wobei der monomere Kettenverlängerer wenigstens eine Carboxylgruppe (B) und wenigstens zwei Hydroxygruppen (A) oder Hydroxyalkyl-substituierte Hydroxylgruppen (A) aufweist.

**5.** Membran nach Anspruch 4, wobei das dendritische (Co)polymer die Formel (II) besitzt:

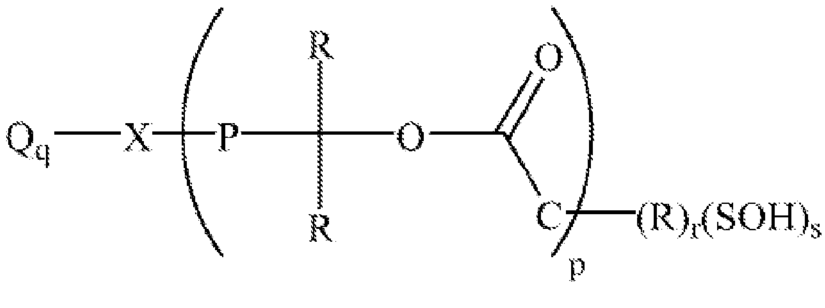

(II)

worin X O oder C ist;

Q H oder lineares oder verzweigtes $C_1$-$C_6$-Alkyl ist;
P lineares oder verzweigtes $C_1$-$C_6$-Alkylen ist;
R H oder lineares verzweigtes $C_1$-$C_6$-Alkyl ist;

p + q = 2 oder 4;
wenn X O ist, dann q = 0 und p = 2;
wenn X C ist, dann p = 2 - 4, q 0 - 2 und p + q = 4,
S lineares oder verzweigtes $C_1$-$C_6$-Alkylen ist;
r + s = 3;
r = 0 oder 1; und
s = 2 oder 3.

**6.** Membran nach einem der Ansprüche 1 bis 5, wobei das hyperverzweigte (Co)polymer einen zentralen Kern umfasst, der mit wenigstens einer Generation eines monomeren oder polymeren Verzweigungskettenverlängerers und gegebenenfalls mit wenigstens einer Generation eines monomeren oder polymeren Abstandskettenverlängerers umgesetzt wird, wobei:

(a) der zentrale Kern vor der Reaktion eine reaktive Epoxidgruppe umfasst und ausgewählt ist aus der Gruppe, bestehend aus:

(i) einem Glycidylester:

(1) einer gesättigten monofunktionellen Carbonsäure mit 1 - 24 Kohlenstoffatomen;
(2) einer ungesättigten monofunktionellen Carbonsäure mit 3 - 24 Kohlenstoffatomen; oder
(3) einer gesättigten oder ungesättigten di-, tri- oder polyfunktionellen Carbonsäure mit 3 - 24 Kohlenstoffatomen;

(ii) einem Glycidylether:

(1) eines gesättigten monofunktionellen Alkohols mit 1 - 24 Kohlenstoffatomen;
(2) eines ungesättigten monofunktionellen Alkohols mit 2 - 24 Kohlenstoffatomen;
(3) eines gesättigten oder ungesättigten di-, tri- oder polyfunktionellen Alkohols mit 3 - 24 Kohlenstoffatomen;
(4) eines Phenols oder einem Reaktionsprodukt davon;
(5) eines Kondensationsproduktes zwischen einem Phenol und einem Aldehyd oder einem Oligomer eines solchen Produktes;

(iii) einem Mono-, Di- oder Triglycidyl-substituierten Isocyanurat; und
(iv) einem aliphatischen, cycloaliphatischen oder aromatischen Epoxypolymer;

(b) wobei der Verzweigungskettenverlängerer drei oder mehr reaktive Stellen umfasst, von denen eine eine Hydroxygruppe oder eine Hydroxyalkyl-substituierte Hydroxygruppe und eine Carboxygruppe oder terminales Epoxid ist; und
(c) wobei der optionale Abstandskettenverlängerer zwei oder mehr reaktive Stellen umfasst, von denen eine eine Hydroxygruppe oder Hydroxyalkyl-substituierte Hydroxygruppe ist.

**7.** Membran nach einem der Ansprüche 1 bis 6, wobei das dendrititsche (Co)polymer und das hyperverzweigte (Co) polymer die 1. bis 6. Generation umfassen.

**8.** Membran nach einem der Ansprüche 1 bis 7, wobei das dendritische (Co)polymer und das hyperverzweigte (Co) polymer 12 bis 128 Hydroxygruppen als funktionelle Gruppen besitzen.

**9.** Membran nach einem der Ansprüche 1 bis 8, wobei das dendritische (Co)polymer und das hyperverzweigte (Co) polymer ein $M_w$ von 1000 - 10000 besitzen.

**10.** Membran nach einem der Ansprüche 1 bis 9, wobei das dendritische (Co)polymer und das hyperverzweigte (Co) polymer eine $T_g$ von weniger als 80°C besitzen.

**11.** Membran nach einem der Ansprüche 1 bis 10, wobei (b) ein dendritisches (Co)polymer ist.

**12.** Membran nach einem der Ansprüche 1 bis 11, die weiter einen Träger umfasst.

**13.** Membran nach Anspruch 12, wobei der Träger ein anisotroper poröser Träger ist.

**14.** Verfahren zur Herstellung einer Membran nach einem der Ansprüche 1 bis 7, wobei eine Polymerzusammensetzung, die (i) ein dendritisches (Co)polymer, ein hyperverzweigtes (Co)polymer oder eine Mischung davon und (ii) ein (Co) polymer, das eine Arylenoxid-Einheit umfasst, zu einer Membran ausgebildet wird.

**15.** Verfahren nach Anspruch 14, wobei die Polymerzusammensetzung 0,01 bis 10,0 Gew.-% des dendritischen (Co) polymers, des hyperverzweigten (Co)polymers oder der Mischung davon umfasst, berechnet auf der Basis des Gesamtgewichtes der Polymerzusammensetzung.

**16.** Verwendung der Membran nach einem der Ansprüche 10 bis 13 zur Trennung eines Gases.

**17.** Verwendung nach Anspruch 16, wobei die Membran eine Polymerzusammensetzung umfasst, die (a) ein (Co) polymer, das eine Arylenoxid-Einheit umfasst, und (b) ein dendritisches (Co)polymer, ein hyperverzweigtes (Co) polymer oder eine Mischung davon umfasst, wobei die Polymerzusammensetzung die Permeabilität und/oder Selektivität der Membran verstärkt.

**Revendications**

**1.** Membrane comprenant une composition de polymère comprenant (a) un (co)polymère comprenant un motif d'oxyde d'arylène et (b) un (co)polymère dendritique, un (co)polymère hyper-ramifié ou un mélange de ceux-ci.

**2.** Membrane selon la revendication 1, dans laquelle la composition de polymère comprend de 0,01 à 10,0% en poids du (co)polymère dendritique, du (co)polymère hyper-ramifié ou d'un mélange de ceux-ci, calculés sur le poids total de la composition de polymère.

**3.** Membrane selon la revendication 1 ou 2, dans laquelle le (co)polymère comprenant le motif d'oxyde d'arylène a la formule (I) :

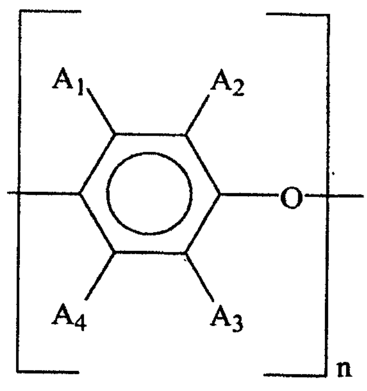

(I)

dans laquelle $A_1$, $A_2$, $A_3$ et $A_4$ sont indépendamment choisis dans le groupe constitué d'hydrogène, alkyle en $C_1$-$C_{12}$ linéaire ou ramifié qui peut éventuellement être halogéné, un arylalkyle en $C_6$-$C_{12}$, un alkylaryle en $C_6$-$C_{12}$ et un halogène. De préférence, $A_2$ et $A_3$ sont indépendamment choisis parmi les groupes alkyle en $C_1$-$C_4$, linéaires ou ramifiés, et $A_1$ et $A_2$ sont indépendamment choisis parmi l'hydrogène, l'halogène et les groupes alkyle en $C_1$-$C_4$ linéaires ou ramifiés.

**4.** Membrane selon l'une quelconque des revendications 1-3, dans laquelle le (co)polymère dendritique est dérivé d'un amorceur central ayant au moins un groupe hydroxy réactif (A), ledit groupe hydroxy (A) est lié, lors de la formation d'une structure arborescente initiale, à un groupe carboxyle réactif (B) d'un allongeur de chaîne monomère comportant les deux groupes réactifs (A) et (B), ladite structure arborescente étant éventuellement allongée et davantage ramifiée depuis la molécule amorceur par addition d'autres molécules d'un allongeur de chaîne monomère, au moyen d'une liaison avec les groupes réactifs (A) et (B), dans lequel l'allongeur de chaîne monomère a au moins un groupe carboxyle (B) et au moins deux groupes hydroxy (A) ou des groupes hydroxyle substitués par un groupe hydroxyalkyle (A).

**5.** Membrane selon la revendication 4, dans laquelle le (co)polymère dendritique a la formule (II) :

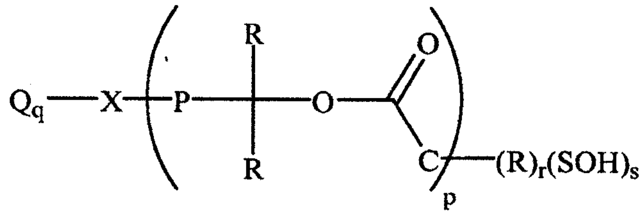

(II)

dans laquelle X est un O ou C ;

Q est un H ou un alkyle en $C_1$-$C_6$ linéaire ou ramifié ;
P est un alkylène en $C_1$-$C_6$ linéaire ou ramifié ;
R est un H ou un alkyle en $C_1$-$C_6$ linéaire ou ramifié ;
p + q = 2 ou 4 ;
si X est un O, alors q = 0 et p = 2.
si X est un C, alors p = 2 - 4, q = 0 - 2 et p + q = 4 ;
S est un alkylène en $C_1$-$C_6$ linéaire ou ramifié ;
r + s = 3 ;
r = 0 ou 1 ; et
s = 2 ou 3.

**6.** Membrane selon l'une quelconque des revendications 1-5, dans laquelle le (co)polymère hyper-ramifié comprend un noyau central ayant réagi avec au moins une génération d'un allongeur de chaîne de ramification, monomère ou polymère, et éventuellement avec au moins une génération d'un allongeur de chaîne d'espacement, monomère ou polymère, dans laquelle :

(a) le noyau central, avant la réaction, comprend un groupe époxy réactif et est choisi dans le groupe constitué de :

(i) un ester de glycidyle de :

(1) un acide carboxylique monofonctionnel saturé ayant 1-24 atomes de carbone ;
(2) un acide carboxylique monofonctionnel insaturé ayant 3-24 atomes de carbone ; ou
(3) un acide carboxylique di-, tri ou polyfonctionnel saturé ou insaturé ayant 3-24 atomes de carbone ;

(ii) un éther de glycidyle de :

(1) un alcool monofonctionnel saturé ayant 1-24 atomes de carbone ;
(2) un alcool monofonctionnel insaturé ayant 2-24 atomes de carbone ;
(3) un alcool di-, tri- ou polyfonctionnel saturé ou insaturé ayant 3-24 atomes de carbone ;
(4) un phénol ou son produit de réaction ;
(5) un produit de condensation entre un phénol et un aldéhyde ou un oligomère d'un tel produit ;

(iii) un isocyanurate portant un, deux ou trois substituants glydicyle ; et
(iv) un polymère époxy aliphatique, cycloaliphatique ou aromatique ;

(b) dans lequel l'allongeur de chaîne de ramification comprend trois sites réactifs ou plus, l'un d'eux étant un groupe hydroxy ou un groupe hydroxy substitué par un groupe hydroxyalkyle et un groupe carboxy ou un époxy terminal, et

(c) dans lequel l'allongeur de chaîne d'espacement facultatif comprend deux sites réactionnels ou plus, dont l'un est un groupe hydroxy ou un groupe hydroxy substitué par un groupe hydroxyalkyle.

**7.** Membrane selon l'une quelconque des revendications 1-6, dans laquelle le (co)polymère dendritique et le (co) polymère hyper-ramifié comprennent d'une à six générations.

**8.** Membrane selon l'une quelconque des revendications 1-7, dans laquelle le (co)polymère dendritique et le (co) polymère hyper-ramifié ont de 12 à 128 groupes hydroxy comme groupes fonctionnels.

**9.** Membrane selon l'une quelconque des revendications 1-8, dans laquelle le (co)polymère dendritique et le (co) polymère hyper-ramifié ont une $M_w$ de 1000 - 10000.

**10.** Membrane selon l'une quelconque des revendications 1-9, dans laquelle le (co)polymère dendritique et le (co) polymère hyper-ramifié ont une $T_g$ inférieure à 80°C.

**11.** Membrane selon l'une quelconque des revendications 1-10, dans laquelle (b) est un (co)polymère dendritique.

**12.** Membrane selon l'une quelconque des revendications 1-11, comprenant en outre un support.

**13.** Membrane selon la revendication 12, dans laquelle le support est un support poreux anisotropique.

**14.** Procédé de préparation d'une membrane selon l'une quelconque des revendications 1-7, dans lequel une composition de polymère comprenant (i) un (co)polymère dendritique, un (co)polymère hyper-ramifié ou un mélange de ceux-ci et (ii) un (co)polymère comprenant un motif d'oxyde d'arylène, est mise sous la forme d'une membrane.

**15.** Procédé selon la revendication 14, dans lequel la composition de polymère comprend de 0,01 à 10,0% en poids du (co)polymère dendritique, du (co)polymère hyper-ramifié ou d'un mélange de ceux-ci, calculés sur le poids total de la composition de polymère.

**16.** Utilisation de la membrane selon l'une quelconque des revendications 10-13, pour la séparation d'un gaz.

**17.** Utilisation selon la revendication 16, dans laquelle la membrane comprend une composition de polymère comprenant (a) un (co)polymère comportant un motif d'oxyde d'arylène et (b) un (co)polymère dendritique, un (co)polymère hyper-ramifié ou un mélange de ceux-ci, ladite composition de polymère augmentant la perméabilité et/ou la sélectivité de la membrane.

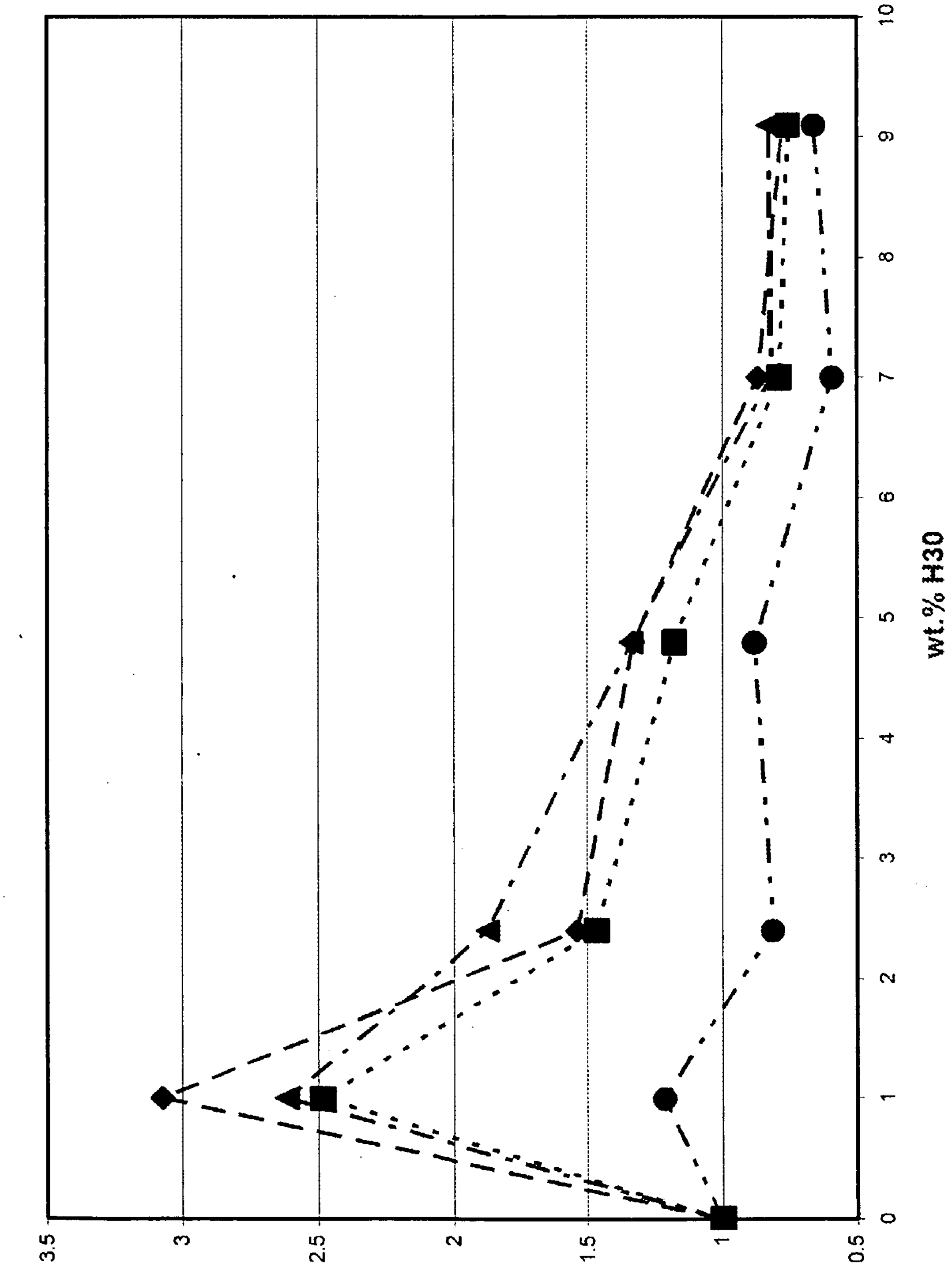
0
1
2
3
4
5
6
7
8
9
10
wt.% H30
3.5
3
2.5
2
1.5
1
0.5
P PPO-H30/ P PPO

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3350844 A
- US 3709774 A
- US 3762136 A
- US 3852388 A
- US 3980456 A
- US 5129920 A
- US 4230463 A
- US 3735559 A
- US 4652283 A
- US 5151182 A
- US 20040177753 A
- WO 9940996 A
- WO 0243937 A
- US 5418301 A
- US 5663247 A


### Non-patent literature cited in the description


- **R.W. Baker.** *Ind. Eng. Chem. Res.,* 2002, vol. 41, 1393-1411
- **L.M. Robeson.** *J. Memb. Sci.,* 1991, vol. 62, 165
- **Ruiz-Trevino ; Paul.** *J. Appl. Polym. Sci.,* 1998, vol. 68, 403-415
- **Y. Xiao ; T-S. Chung ; M.L. Chng.** *Langmuir,* 2004, vol. 20, 8230-8238
- **Nijdam et al.** *J. Memb. Sci,* 2005, vol. 256, 209-215
- **J. Smid et al.** *J. Membr. Sci.,* 1991, vol. 64, 121